# EUROPEAN PATENT APPLICATION

(11) **EP 4 518 014 A1**
(43) Date of publication of application: **05.03.2025**
(21) Application number: 23794706.4
(22) Date of filing: 17.02.2023
(51) Int. Cl.: H01M 50/583

(54) **BATTERY MODULE, NAIL PENETRATION PROTECTION METHOD FOR BATTERY MODULE, AND VEHICLE**

(30) Priority: 29.04.2022 CN 202210473891
(71) Applicant: BYD Company Limited, Shenzhen, Guangdong 518118 (CN)
(72) Inventor: HU, Shichao, Shenzhen, Guangdong 518118 (CN)
(74) Representative: Gunzelmann, Rainer
(86) International application number: PCT/CN2023/076851
(87) International publication number: WO 2023/207270

(57) **Abstract**

A battery module, a nail penetration protection method for a battery module, and a vehicle. The battery module comprises: a plurality of battery cells, the plurality of battery cells being connected in series and comprising a first battery cell group and a second battery cell group which are oppositely provided, and the first battery cell group and the second battery cell group being each provided with at least one battery cell; a protection assembly, the protection assembly being located between the first battery cell group and the second battery cell group, and the protection assembly comprising a first metal member, a first insulating member, and a second metal member which are stacked; and protection components, each of which is provided between two adjacent battery cells, the protection component being capable of cutting off a circuit. When a test steel nail sequentially passes through the battery cell corresponding to the first metal member in the first battery cell group, the first metal member, the first insulating member, and the second metal member, the battery module forms a loop; and When the test steel nail penetrates the battery cell corresponding to the second metal member in the second battery cell group, a short circuit loop is newly added in the battery module.

## Description

### CROSS-REFERENCE TO RELATED APPLICATIONS

The present disclosure claims priority to and benefits of Chinese Patent Application No. 202210473891.7, filed on April 29, 2022 and entitled "BATTERY MODULE, NAIL PENETRATION PROTECTION METHOD FOR BATTERY MODULE, AND VEHICLE". The entire content of the above-referenced application is incorporated herein by reference.

### FIELD

The present disclosure relates to a battery module, a nail penetration protection method for a battery module, and a vehicle having the battery module.

### BACKGROUND

When existing batteries, particularly, lithium iron phosphate batteries, are subjected to nail penetration tests, a single lithium iron phosphate battery is not prone to a fire or explosion under a nail penetration condition and can pass the nail penetration tests. However, when batteries are connected in series, particularly, when a number of batteries connected in series is greater than or equal to 3, violent arcing, fire, and combustion may occur during nail penetration tests.

### SUMMARY

An objective of the present disclosure is to provide a battery module, to resolve a technical problem that a battery in the related art is prone to arcing, fire, and combustion in a nail penetration test.

Another objective of the present disclosure to provide a nail penetration protection method for a battery module. The nail penetration protection method can improve safety performance of the battery module during a nail penetration test.

Still another objective of the present disclosure is to provide a vehicle, having the foregoing battery module, which can improve safety performance.

According to a first aspect of the present disclosure, a battery module is provided, including multiple battery cores, a guard assembly, and a protection component. The multiple battery cores are connected in series. The multiple battery cores include a first battery core group and a second battery core group oppositely arranged. The first battery core group and the second battery core group are each provided with at least one of the battery cores. The guard assembly is located between the first battery core group and the second battery core group, and includes a first metal member, a first insulation member, and a second metal member that are stacked. The first metal member is arranged opposite to at least one of the battery cores in the first battery core group, and the second metal member is arranged opposite to at least one of the battery cores in the second battery core group. The protection component is arranged between two of the battery cores adjacently arranged, and configured to cut off a circuit. When a test steel nail sequentially passes through the battery core corresponding to the first metal member in the first battery core group, the first metal member, the first insulation member, and the second metal member, a loop is formed in the battery module. When the test steel nail penetrates the battery core corresponding to the second metal member in the second battery core group, a short-circuit loop is added to the battery module.

In an embodiment, the first insulation member includes a first insulation layer and a second insulation layer, and the guard assembly includes a first composite layer and a second composite layer. The first composite layer includes the first insulation layer and the first metal member, and the second composite layer includes the second insulation layer and the second metal member.

In an embodiment, the guard assembly further includes a second insulation member. The second insulation member is located between the first battery core group and the first metal member, and/or located between the second battery core group and the second metal member.

In an embodiment, the protection component is a fuse.

In an embodiment, the first metal member and the second metal member are each an elongated sheet-shaped body. An end of the sheet-shaped body along a length direction thereof is connected to a terminal of the battery core.

In an embodiment, a position at which the sheet-shaped body is connected to the battery core in the corresponding first battery core group or second battery core group is adjustable.

In an embodiment, the sheet-shaped body includes a body and an electrical connection piece. The body is in an elongated shape, and the electrical connection piece is located at an end of the body along a length direction. A length of the electrical connection piece is less than a width of the body, and the electrical connection piece is a bent member.

In an embodiment, a number of the battery cores in the first battery core group is equal to a number of the battery cores in the second battery core group.

According to a second aspect of the present disclosure, a nail penetration protection method for a battery module is provided. The battery module is the battery module according to any one of the foregoing. The nail penetration protection method includes the following steps: A loop is formed in the battery module when a test steel nail sequentially penetrates through the battery core corresponding to the first metal member in the first battery core group, the first metal member, and the first insulation member to the second metal member. A short-circuit loop is added to the battery module when the test steel nail penetrates the battery core corresponding to the second metal member in the second battery core group.

According to a third aspect of the present disclosure, a vehicle is provided. The vehicle includes the battery module according to any one of the foregoing.

In an embodiment, a guard assembly is arranged between a first battery core group and a second battery core group oppositely arranged. Through cooperation between the guard assembly and a protection component, arcing, fire, and combustion can be avoided during a nail penetration test when multiple battery cores are connected in series.

Other features and advantages of the present disclosure will become apparent from the following detailed description of exemplary embodiments of the present disclosure with reference to the accompanying drawings.

### BRIEF DESCRIPTION OF THE DRAWINGS

The accompanying drawings incorporated into the specification and constituting a part of the specification show embodiments of the present disclosure and are used for describing a principle of the present disclosure together with the specification.
FIG. 1 is a schematic structural diagram of a module according to the related art from one perspective;
FIG. 2 is a schematic structural diagram of a module according to the related art from another perspective;
FIG. 3 is a partial exploded view of a battery module according to an embodiment of the present disclosure from one perspective;
FIG. 4 is a schematic diagram of assembly of a second battery core and a second composite layer of a battery module according to an embodiment of the present disclosure;
FIG. 5 is a schematic diagram of assembly of a second battery core and a second composite layer of a battery module according to an embodiment of the present disclosure;
FIG. 6 is a partial exploded view of a battery module according to an embodiment of the present disclosure from another perspective;
FIG. 7 is a schematic diagram of assembly of a second insulation member, a first metal member, and a first insulation layer of a battery module according to an embodiment of the present disclosure;
FIG. 8 is a schematic diagram of assembly of a second insulation member, a second metal member, and a second insulation layer of a battery module according to an embodiment of the present disclosure;
FIG. 9 is a schematic diagram of assembly of a body and an electrical connection piece of a battery module according to an embodiment of the present disclosure;
FIG. 10 is a partial exploded view of a battery module according to another embodiment of the present disclosure;
FIG. 11 is a partial exploded view of a battery module according to another embodiment of the present disclosure;
FIG. 12 is a partial exploded view of a battery module according to another embodiment of the present disclosure;
FIG. 13 is a partial exploded view of a battery module according to another embodiment of the present disclosure;
FIG. 14 is a schematic diagram of a loop formed in a battery module according to an embodiment of the present disclosure during a nail penetration test;
FIG. 15 is a schematic diagram of a loop formed in a battery module according to an embodiment of the present disclosure during a nail penetration test;
FIG. 16 is a schematic diagram of a loop formed in a battery module according to an embodiment of the present disclosure during a nail penetration test;
FIG. 17 is a schematic diagram of a loop formed in a battery module according to an embodiment of the present disclosure during a nail penetration test;
FIG. 18 is a schematic diagram of a loop formed in a battery module according to an embodiment of the present disclosure during a nail penetration test; and
FIG. 19 is a schematic diagram of a battery module according to an embodiment of the present disclosure during a nail penetration test.

### List of reference numerals:

battery module 100;
first battery core 11; second battery core 12;
protection component 20;
first composite layer 30; first metal member 31; first insulation layer 32;
second composite layer 40; second metal member 41; second insulation layer 42;
second insulation member 50;
body 61; electrical connection piece 62;
test steel nail 200;
battery 1; battery 2; safety structure 3.

### DETAILED DESCRIPTION

Various exemplary embodiments of the present disclosure are described herein in detail with reference to the accompanying drawings. It should be noted that unless otherwise specified, the relative deployment, the numerical expression, and values of the components and steps described in the embodiments do not limit the scope of the present disclosure.

In fact, the following descriptions of at least one exemplary embodiment are merely illustrative, and in no way constitute any limitation on the present disclosure and application or use of the present disclosure.

Technologies, methods, and devices known to a person of ordinary skill in the art may not be discussed in detail, but in proper circumstances, the technologies, methods, and devices shall be regarded as a part of the specification.

In all examples that are shown and discussed herein, any specific value should be interpreted only as an example and not as a constraint. Therefore, other examples of the exemplary embodiments may have different values.

It should be noted that: similar reference signs or letters in the accompanying drawings indicate similar items. Therefore, once an item is defined in one accompanying drawing, the item does not need to be further discussed in the subsequent accompanying drawings.

The present disclosure is an invention made by the inventor based on the following facts.

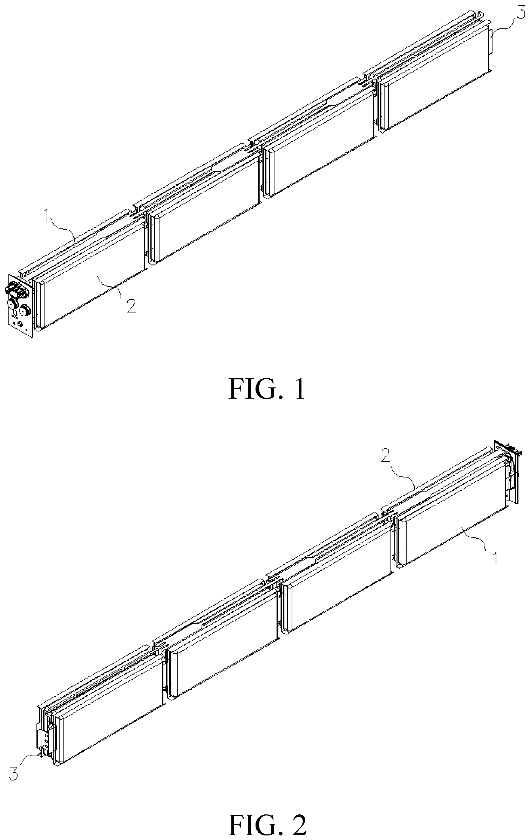

FIG. 1 and FIG. 2 show overall structural diagrams of a battery module in the related art.

FIG. 1 shows a blade-shaped module structure in the related art. The module has positive and negative poles on a same side, and is a U-shaped series structure. As shown in FIG. 2, the U-shaped structure has a U-shaped safety structure 3 at a tail. In this case, during a nail penetration test, a steel nail enters from a battery 1 and continues moving forward to penetrate through the battery 2. In a process in which a single steel nail penetrates through the battery 1, the steel nail connects positive and negative pole pieces in the battery 1. The steel nail serves as a conductor. There is a huge current between each of the positive and negative pole pieces and the steel nail, and the huge current melts the positive and negative pole pieces around the steel nail. At a moment when the steel nail penetrates through the battery 1 and just penetrates the battery 2, due to existence of a potential difference between the battery 1 and the battery 2, arcing between the steel nail and the battery 2 is caused. The steel nail continues penetrating the battery 2. Since the positive and negative pole pieces of the battery 1 are both ablated at peripheries in contact with the steel nail, contact resistance between the steel nail and the positive and negative pole pieces of the battery 1 increases. A loop formed by the battery 1, the steel nail, the battery 2, another battery, and the safety structure has large resistance, which can hardly cause quick blowing of the safety structure, resulting in long duration of the arcing. The continuous arcing burns an aluminum shell through, which causes air to enter into a cavity of the module, and ignites an electrolyte in the battery, resulting in a fire.

Based on this, the inventor of the present disclosure creatively obtains the following invention after long-term researches and experiments.

A battery module 100 according to an embodiment of the present disclosure is described below with reference to the accompanying drawings.

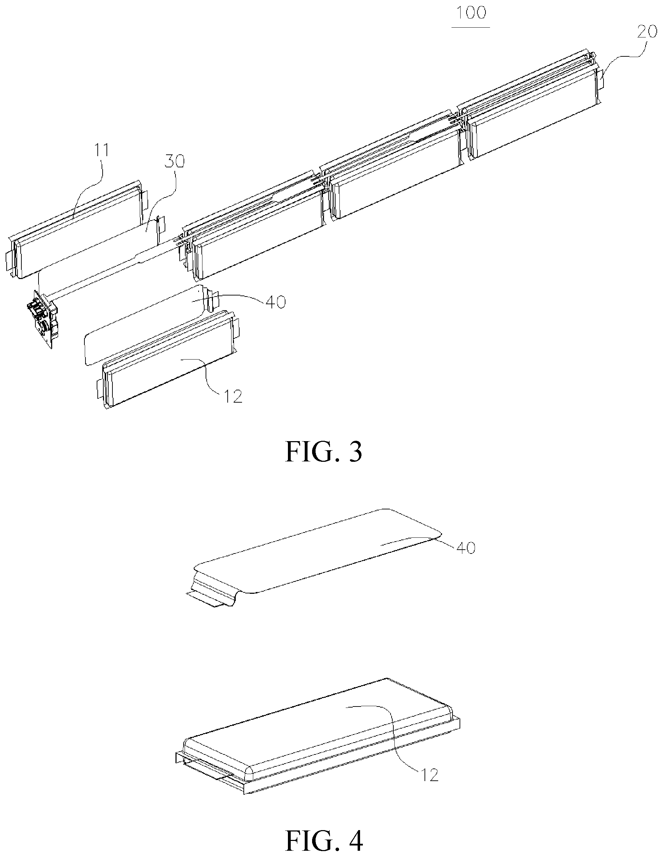

As shown in FIG. 3 to FIG. 13, the battery module 100 according to this embodiment of the present disclosure includes multiple battery cores, a guard assembly, and a protection component.

Specifically, the multiple battery cores are connected in series. The multiple battery cores include a first battery core group and a second battery core group oppositely arranged. The first battery core group and the second battery core group are each provided with at least one of the battery cores. The guard assembly is located between the first battery core group and the second battery core group. The guard assembly includes a first metal member 31, a first insulation member, and a second metal member 41 that are stacked. The first metal member 31 is arranged opposite to at least one of the battery cores in the first battery core group, and the second metal member 41 is arranged opposite to at least one of the battery cores in the second battery core group. The protection component 20 is arranged between two of the battery cores adjacently arranged. The protection component 20 can cut off a circuit.

When a test steel nail 200 sequentially passes through the battery core corresponding to the first metal member 31 in the first battery core group, the first metal member 31, the first insulation member, and the second metal member 41, a loop is formed in the battery module 100. When the test steel nail 200 penetrates the battery core corresponding to the second metal member 41 in the second battery core group, a short-circuit loop is added to the battery module 100.

In other words, the battery module 100 according to this embodiment of the present disclosure mainly includes multiple battery cores, a guard assembly, and a protection component. The multiple battery cores are connected in series. It should be noted that the battery module 100 in this embodiment of the present disclosure, as a whole, may be a circuit connected in series, or may be a circuit connected in series and parallel. Optionally, the first battery core in the multiple battery cores may be electrically connected to a total positive pole of the battery module 100, and the last battery core in the multiple battery cores may be electrically connected to a total negative pole of the battery module 100. In other words, the multiple battery cores connected in series may form a battery core string. The first battery core in the battery core string can be electrically connected to the total positive pole, and the last battery core can be electrically connected to the total negative pole. Optionally, the total positive pole and the total negative pole of the battery module 100 may be located on a same side. Optionally, the battery module 100 may be substantially a U-shaped series-connection structure.

The battery core string includes a first battery core group and a second battery core group oppositely arranged. In other words, the first battery core group includes at least one battery core, and the second battery core group also includes at least one battery core. For ease of description, one battery core in the first battery core group is defined as a first battery core 11, and one battery core in the second battery core group is defined as a second battery core 12. The first battery core 11 and the second battery core 12 are oppositely arranged. For example, the first battery core 11 and the second battery core 12 respectively extend along a horizontal direction, and the second battery core 12 is located above or below the first battery core 11.

It should be noted that the first battery core group includes at least one battery core, and the second battery core group includes at least one battery core. A guard assembly is arranged between the first battery core group and the second battery core group. A position of the guard assembly is described below by using examples.

### Case 1

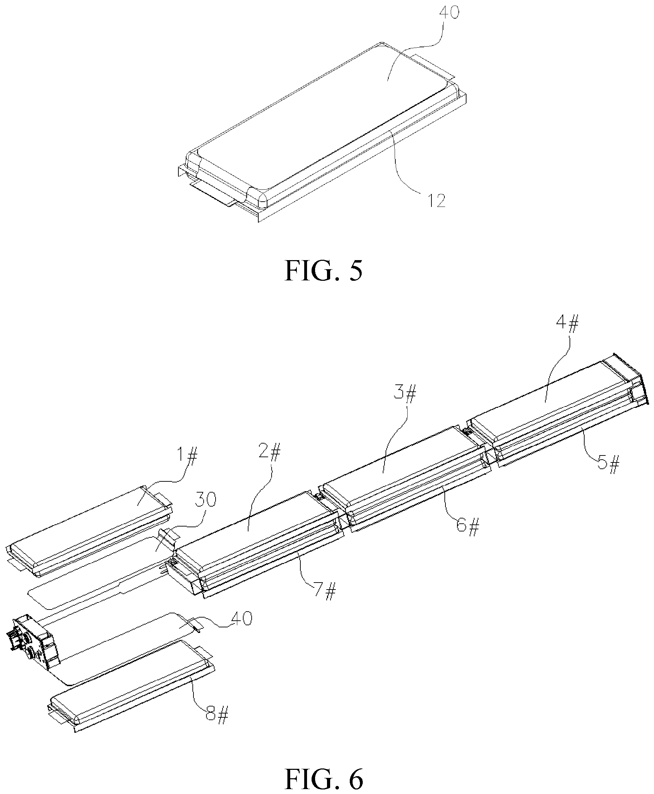

As shown in FIG. 6, the first battery core group includes 4 battery cores, and the second battery core group includes 4 battery cores. The first battery core 11 of the first battery core group is connected to the total positive pole, and the second battery core 12 is connected to the total negative pole. In this case, the guard assembly is located between the first battery core 11 and the second battery core 12, and the guard assembly does not exceed the first battery core 11 and the second battery core 12.

### Case 2

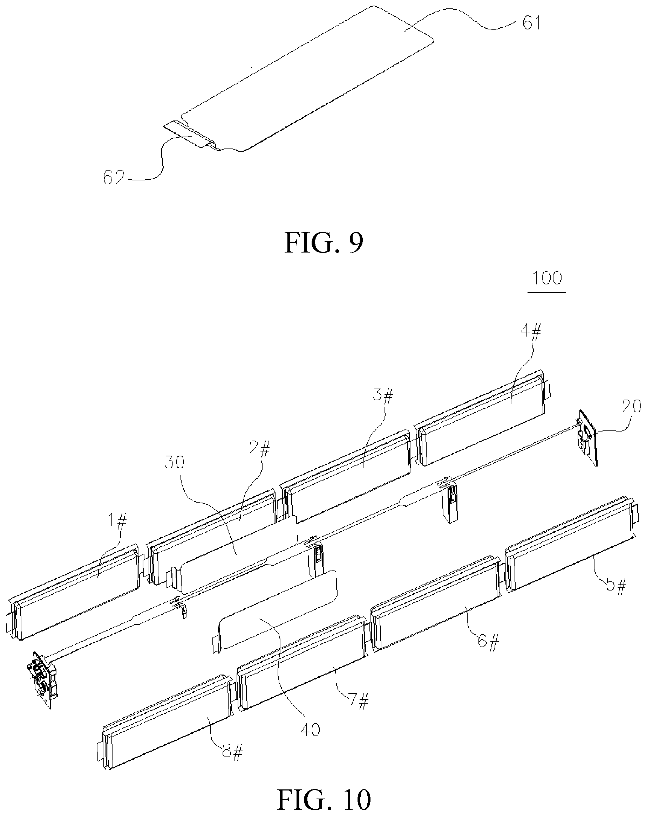

As shown in FIG. 10, the first battery core group includes 4 battery cores, and the second battery core group includes 4 battery cores. For ease of description, the battery core string is divided into a battery core 1#, a battery core 2#, a battery core 3#, a battery core 4#, a battery core 5#, a battery core 6#, a battery core 7#, and a battery core 8#. The first battery core group includes the battery core 1#, the battery core 2#, the battery core 3#, and the battery core 4#. The second battery core group includes the battery core 5#, the battery core 6#, the battery core 7#, and the battery core 8#. The battery core 1# is connected to the total positive pole, and the battery core 8# is connected to the total negative pole. The battery core 2# and the battery core 7# are oppositely arranged. The battery core 3# and the battery core 6# are oppositely arranged. The battery core 4# and the battery core 5# are oppositely arranged. One side of the guard assembly is arranged opposite to the battery core# 2, and an other side of the guard assembly is arranged opposite to the battery core# 7.

### Case 3

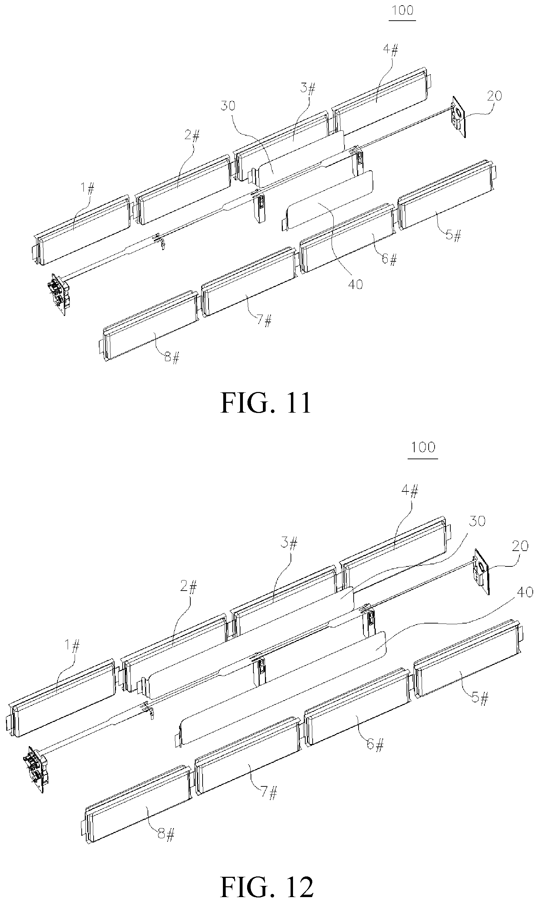

As shown in FIG. 11, the first battery core group includes 4 battery cores, and the second battery core group includes 4 battery cores. For ease of description, the battery core string is divided into a battery core 1#, a battery core 2#, a battery core 3#, a battery core 4#, a battery core 5#, a battery core 6#, a battery core 7#, and a battery core 8#. The first battery core group includes the battery core 1#, the battery core 2#, the battery core 3#, and the battery core 4#. The second battery core group includes the battery core 5#, the battery core 6#, the battery core 7#, and the battery core 8#. The battery core 1# is connected to the total positive pole, and the battery core 8# is connected to the total negative pole. The battery core 2# and the battery core 7# are oppositely arranged. The battery core 3# and the battery core 6# are oppositely arranged. The battery core 4# and the battery core 5# are oppositely arranged. One side of the guard assembly is arranged opposite to the battery core 3#, and an other side of the guard assembly is arranged opposite to the battery core 6#.

### Case 4

As shown in FIG. 12, the first battery core group includes 4 battery cores, and the second battery core group includes 4 battery cores. For ease of description, the battery core string is divided into a battery core 1#, a battery core 2#, a battery core 3#, a battery core 4#, a battery core 5#, a battery core 6#, a battery core 7#, and a battery core 8#. The first battery core group includes the battery core 1#, the battery core 2#, the battery core 3#, and the battery core 4#. The second battery core group includes the battery core 5#, the battery core 6#, the battery core 7#, and the battery core 8#. The battery core 1# is connected to the total positive pole, and the battery core 8# is connected to the total negative pole. The battery core 2# and the battery core 7# are oppositely arranged. The battery core 3# and the battery core 6# are oppositely arranged. The battery core 4# and the battery core 5# are oppositely arranged. One side of the guard assembly is opposite to both the battery core 2# and the battery core 3#, and an other side of the guard assembly is opposite to both the battery core 7# and the battery core 6#.

### Case 5

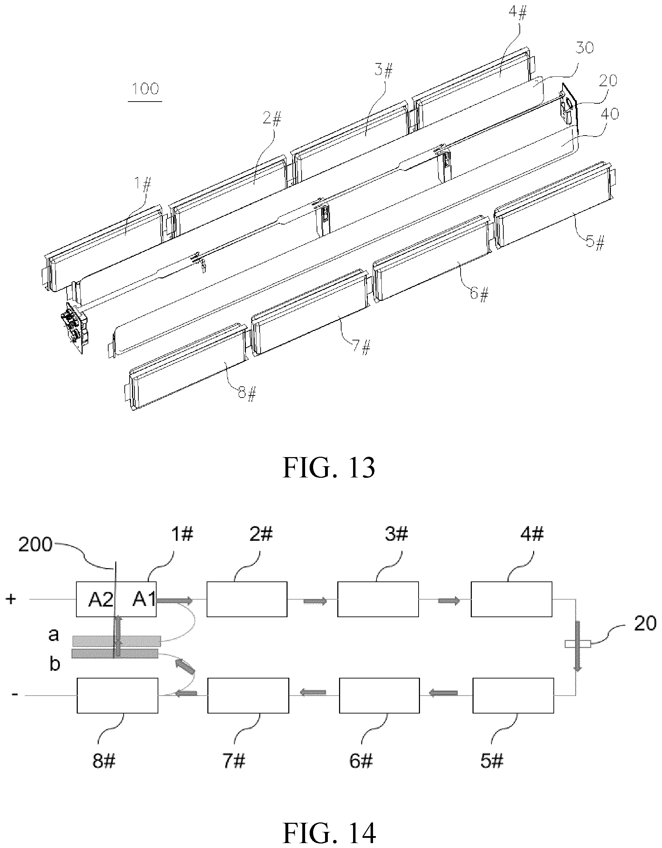

As shown in FIG. 13, the first battery core group includes 4 battery cores, and the second battery core group includes 4 battery cores. For ease of description, the battery core string is divided into a battery core 1#, a battery core 2#, a battery core 3#, a battery core 4#, a battery core 5#, a battery core 6#, a battery core 7#, and a battery core 8#. The first battery core group includes the battery core 1#, the battery core 2#, the battery core 3#, and the battery core 4#. The second battery core group includes the battery core 5#, the battery core 6#, the battery core 7#, and the battery core 8#. The battery core 1# is connected to the total positive pole, and the battery core 8# is connected to the total negative pole. The battery core 2# and the battery core 7# are oppositely arranged. The battery core 3# and the battery core 6# are oppositely arranged. The battery core 4# and the battery core 5# are oppositely arranged. One side of the guard assembly is opposite to all of the battery core 1#, the battery core 2#, the battery core 3#, and the battery core 4#, and an other side of the guard assembly is opposite to all of the battery core 8#, the battery core 7#, the battery core 6#, and the battery core 5#.

A first metal member 31, a first insulation member, and a second metal member 41 may be arranged between the first battery core 11 and the second battery core 12. The first metal member 31, the first insulation member, and the second metal member 41 are stacked. For example, the second battery core 12, the second metal member 41, the first insulation member, the first metal member 31, and the first battery core 11 are sequentially distributed from bottom to top.

The first metal member 31 is arranged opposite to the first battery core 11, and the second metal member 41 is arranged opposite to the second battery core 12. It should be noted that the first metal member 31 may be connected to a terminal of the first battery core 11 or connected to a terminal of a battery core adjacent to the first battery core 11 or the like, and the second metal member 41 may also be connected to a terminal of the second battery core 12 or connected to a terminal of a battery core adjacent to the second battery core 12 or the like. Provided that a loop exists in the battery module 100 when the test steel nail 200 penetrates through the first battery core 11 and the guard assembly during a nail penetration test, when the test steel nail 200 continues to penetrate the second battery core 12, a short-circuit loop is added to the battery module 100, which falls within the protection scope of the present disclosure.

In addition, a protection component 20 is arranged between two battery cores adjacently arranged in the multiple battery cores. The protection component 20 can cut off a circuit when a condition is met. For example, when a short-circuit loop is added, a resistance value of the loop decreases, and a voltage does not change. According to the Ohm's law: I=U/R, a current increases, so that the protection component 20 can be broken, thereby cutting off the circuit of the battery core string. A fuse or a protection structure formed by a circuit structure of the circuit may be selected as the protection component 20 according to an actual use situation. The protection component 20 of this structure may be configured to perform battery overcurrent protection, thereby improving use safety of the battery module 100. For example, a fuse or an overcurrent structural member with a small cross-sectional area may be selected as the protection component 20. The test steel nail 200 penetrates upward from the first battery core 11, first enters the first battery core 11, and then continues moving forward to penetrate through the first metal member 31 to the second metal member 41. In this case, the high temperature on the test steel nail 200 melts through the first insulation member between the first metal member 31 and the second metal member 41, thereby increasing a contact area between the first metal member 31 and the second metal member 41, and forming a loop among the first battery core 11, the first metal member 31, the second metal member 41, the protection component 20, and the like in advance. When the test steel nail 200 continues moving forward to penetrate the second battery core 12, a short-circuit loop is added among the second battery core 12, the first metal member 31, the second metal member 41, the protection component 20, and the like. According to the Ohm's law: I=U/R, a current is large, which can ensure that the fuse can quickly blow, and nail penetration does not cause a fire or explosion. The battery core in the present disclosure may be a lithium iron phosphate battery or a ternary battery such as a lithium manganate battery.

Therefore, for the battery module 100 according to this embodiment of the present disclosure, the guard assembly is arranged between the first battery core group and the second battery core group oppositely arranged. Through cooperation between the guard assembly and the protection component, it is ensured that a circuit is cut off in time during a nail penetration test when multiple battery cores are connected in series, for example, when a number of battery cores connected in series is greater than or equal to 3, thereby avoiding arcing, fire, and combustion.

According to an embodiment of the present disclosure, as shown in FIG. 3, FIG. 7, and FIG. 8, the first insulation member includes a first insulation layer 32 and a second insulation layer 42, and the guard assembly includes a first composite layer 30 and a second composite layer 40. The first composite layer 30 includes the first insulation layer 32 and the first metal member 31, and the second composite layer 40 includes the second insulation layer 42 and the second metal member 41. That is, the first composite layer 30 includes the first insulation layer 32 and the first metal member 31. To be specific, the first composite layer 30 may include the first insulation layer 32 and the first metal member 31, or may include another structure, for example, a second insulation member 50. When the first composite layer 30 includes the first insulation layer 32 and the first metal member 31, and when an outer periphery of the first battery core 11 is wrapped with an insulation protection layer, an upper surface of the first battery core 11 is insulated from the first metal member 31. Similarly, when an outer periphery of the second battery core 12 is wrapped with an insulation protection layer, a lower surface of the second battery core 12 is also insulated from the second metal member 41. Details are not described herein again.

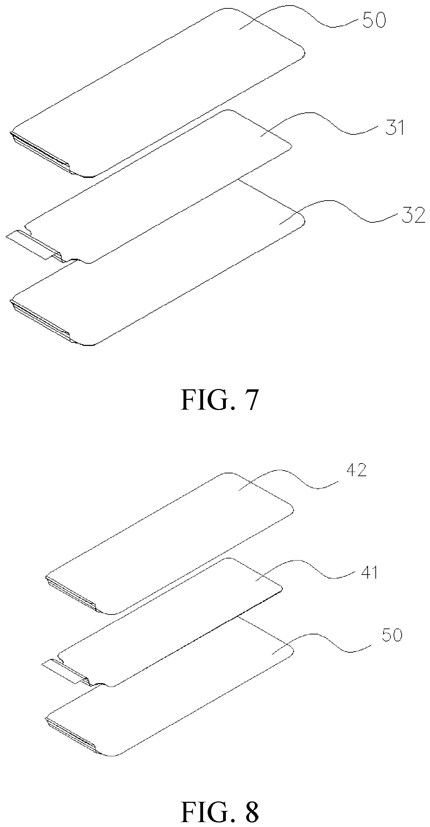

In some specific implementations of the present disclosure, as shown in FIG. 7 and FIG. 8, the guard assembly further includes a second insulation member 50. The second insulation member 50 is located between the first battery core group and the first metal member 31, and/or located between the second battery core group and the second metal member 41. When an outer surface of a battery core is provided with an insulation protection layer, the battery core is a pouch battery core. Based on this, arranging the second insulation member 50 between the first battery core 11 and the first metal member 31 can further enhance guarantee of insulation between the first battery core 11 and the first metal member 31, to prevent insulation between the first battery core 11 and the first metal member 31 from failing due to burrs on the outer surface of the first battery core 11. Similarly, arranging the second insulation member 50 between the second battery core 12 and the second metal member 41 can also improve reliability of insulation between the second battery core 12 and the second metal member 41. Details are not described herein again. When the outer surface of the battery core is a metal shell, the second insulation member 50 can be arranged to ensure that the outer surface of the battery core is insulated from the corresponding first metal member 31 or second metal member 41.

According to an embodiment of the present disclosure, the protection component 20 is a fuse, can generate heat or even blow when the circuit is overcurrent, and has an advantage of high sensitivity.

In some specific implementations of the present disclosure, the first metal member 31 and the second metal member 41 are respectively connected to terminals of corresponding battery cores. To be specific, the first metal member 31 is connected to a terminal of the first battery core 11, and the second metal member 41 is connected to a terminal of the second battery core 12. Along a direction from the first battery core 11 to the second battery core 12, a terminal of the first battery core 11 is arranged opposite to a terminal of the second battery core 12. In other words, a terminal of the first battery core 11 connected to the first metal member 31 and a terminal of the second battery core 12 connected to the second metal member 41 are oppositely arranged.

According to an embodiment of the present disclosure, the first metal member 31 and the second metal member 41 are each an elongated sheet-shaped body. By adopting a sheet-shaped structure, a structural thickness along a direction from the first battery core 11 to the second battery core 12 can be reduced. An end of the sheet-shaped body along a length direction thereof is connected to a terminal of the battery core, so that a connection position on the sheet-shaped body can be prevented from hindering the nail penetration test. It should be noted that the sheet-shaped body may be connected to a left-side terminal of the battery core or may be connected to a right-side terminal of the battery core provided that a short-circuit loop is added to ensure that the fuse blows during the nail penetration test.

According to an embodiment of the present disclosure, a position at which the sheet-shaped body is connected to the battery core in the corresponding first battery core group or second battery core group is adjustable. In other words, according to a specific situation, the sheet-shaped body may be selectively connected to the left-side or right-side terminal of the battery core, or a terminal of another battery core.

In some specific implementations of the present disclosure, as shown in FIG. 7 to FIG. 9, the sheet-shaped body includes a body 61 and an electrical connection piece 62. That is, the sheet-shaped body may include a welding piece and a nail-penetrated piece. The welding piece is the electrical connection piece 62, and the nail-penetrated piece is the body 61. The welding piece can be connected to a terminal of a corresponding battery core. The body 61 is an elongated sheet-shaped body, which not only helps the test steel nail 200 to penetrate through the body 61, but also facilitates sandwiching the body 61 between the first battery core 11 and the second battery core 12, so that a thickness in a direction from the first battery core 11 to the second battery core 12 can be reduced. The electrical connection piece 62 is located at one end of the body 61 along a length direction. A length of the electrical connection piece 62 is smaller than a width of the body 61. For example, the electrical connection piece 62 is located at a central position of the body 61 along a width direction, to facilitate connecting the electrical connection piece 62 to a terminal. The electrical connection piece 62 is a bent member, and using the bent electrical connection piece 62 is conducive to connecting the electrical connection piece 62 to a corresponding terminal.

According to an embodiment of the present disclosure, as shown in FIG. 6, a number of battery cores in the first battery core group is equal to a number of battery cores in the second battery core group. That is, a total number of battery cores is an even number. Using an even number of battery cores facilitates folding the battery module 100 into a U-shaped structure, thereby improving a capacity of battery cores in a battery shell. When the total number of battery cores is an even number, compared with a solution with an odd number of battery cores, there is an advantage of saving space. It should be noted that the battery module of the present disclosure may also be used in a solution with an odd total number of battery cores, but has a complex structure.

The present disclosure further provides a nail penetration protection method for a battery module 100. The battery module 100 is the battery module 100 according to any one of the foregoing embodiments. The nail penetration protection method includes the following steps:

When a test steel nail 200 penetrates through the battery core corresponding to the first metal member 31 in the first battery core group, the first metal member 31, and the first insulation member to the second metal member 41, a loop is formed in the battery module 100.

When the test steel nail 200 penetrates the battery core corresponding to the second metal member 41 in the second battery core group, a short-circuit loop is added to the battery module 100.

For example, when the test steel nail 200 penetrates through the first battery core 11, the first metal member 31, and the first insulation member to the second metal member 41, the protection component 20 is located in a first loop. When the test steel nail 200 continues to penetrate through the second battery core 12, the protection component 20 is located in a second loop, and a resistance value of the second loop is smaller than a resistance value of the first loop, so that a circuit is cut off through the protection component 20.

In other words, after a loop is added, the resistance value decreases, and a voltage does not change. According to the Ohm's law: I=U/R, a current is large, to ensure that the protection component 20 can quickly cut off the circuit, for example, quickly blow, thereby preventing a fire or explosion during nail penetration. In addition, it should be noted that when the test steel nail 200 penetrates through the first battery core 11, the first metal member 31, and the first insulation member to the second metal member 41, the fuse may possibly blow. If the fuse does not blow, when the test steel nail 200 continues to penetrate the second battery core 12, blowing of the fuse can be ensured by adding a short-circuit loop.

The principle of the nail penetration protection method for a battery module 100 according to this embodiment of the present disclosure is described below in detail with reference to specific embodiments.

As shown in FIG. 6, the battery module 100 includes 8 battery cores connected in series. For ease of description, the 8 battery cores are divided into 1#, 2#, 3#, 4#, 5#, 6#, 7#, and 8#. An outer periphery of each battery core is wrapped with an insulation protection layer. That is, the battery core is a pouch battery core. A total positive pole and a total negative pole of the battery module 100 are located on a same side of the battery module 100. A left end of the battery core 1# is connected to the total positive pole, and a left end of the battery core 8# is connected to the total negative pole. The battery core 1# is located above the battery core 8#, the battery core 2# is located above the battery core 7#, the battery core 3# is located above the battery core 6#, and the battery core 4# is located above the battery core 5#. A fuse is arranged between the battery cores 4# and 5# as a protection component 20. For appearance and space saving, the fuse is constructed as a U-shaped safety structure. That is, a U-shaped safety structure is arranged at a structural tail of the U-shaped battery module 100.

### Embodiment 1

The battery core# 1 is a first battery core 11, and the battery core# 8 is a second battery core 12. A first composite layer 30 is arranged below the battery core 1#. The first composite layer 30 includes a second insulation member 50, a first metal member 31, and a first insulation layer 32 from bottom to top. A second composite layer 40 is arranged below the first composite layer 30. The second composite layer 40 includes a second insulation layer 42, a second metal member 41, and a second insulation member 50 from bottom to top. An electrical connection piece 62 of the first metal member 31 is connected to a terminal on a side of the battery core 1# close to the battery core 2#, and an electrical connection piece 62 of the second metal member 41 is connected to a terminal on a side of the battery core 8# close to the battery core 7#. For ease of description, the first composite layer 30 including the second insulation member 50, the first metal member 31, and the first insulation layer 32 is defined as a nail-penetrated sheet a, and the second composite layer 40 including the second insulation layer 42, the second metal member 41, and the second insulation member 50 is defined as a nail-penetrated sheet b.

During a nail penetration test, a steel nail penetrates the battery core 1# from a middle thereof. Using the middle of the battery core 1# as a dividing line, a part of the battery core 1# close to the battery core 2# is A1, and a part thereof close to the total positive pole is A2. Similarly, using a middle of the battery core 8# as a dividing line, a part of the battery core 8# close to the battery core 2# is C1, and a part thereof close to the total positive pole is C2.

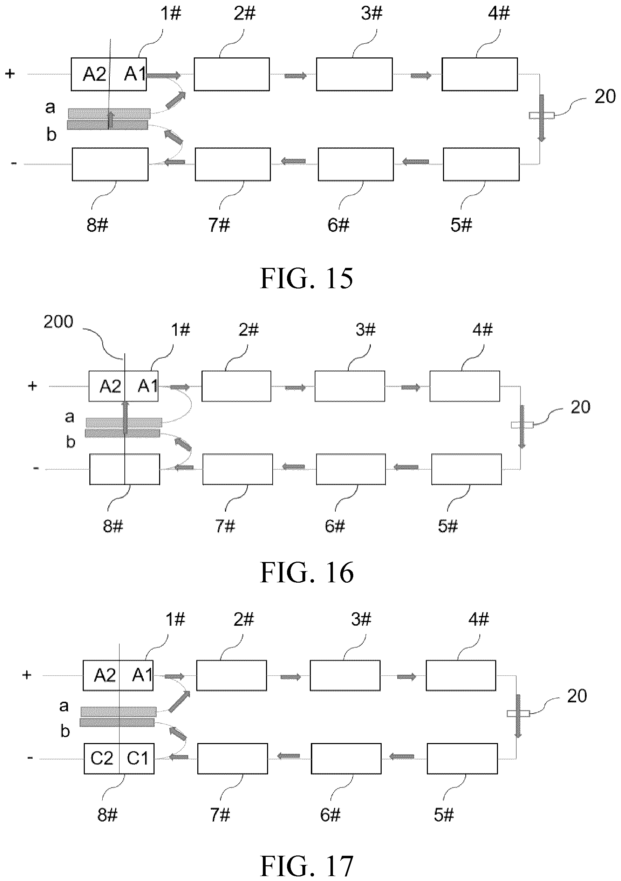

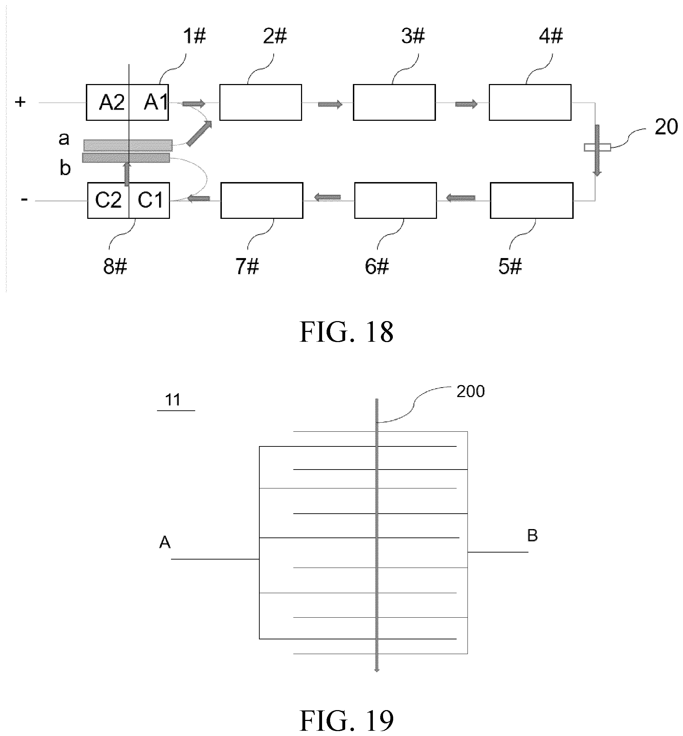

When the steel nail penetrates through the battery core 1# from top to bottom, and continues moving downward to penetrate through the first metal member 31 to the second metal member 41, the high temperature on the steel nail melts through the first insulation layer 32 and the second insulation layer 42 between the first metal member 31 and the second metal member 41. In this case, a contact area between the first metal member 31 and the second metal member 41 increases. In this case, two loops are formed, which are specifically a loop 1 shown in FIG. 14: a-A1-2#...-7#-right-side terminal of 8#-b-a; and a loop 2 shown in FIG. 15: a-right-side terminal of battery core 1#-2#...right-side terminal of 8#-b-a, which is equivalent to externally short-circuiting the battery core 2# and the battery core 7#. In this case, there are two cases: the fuse blows or the fuse does not blow. For example, as shown in FIG. 19, using a first battery core 11 as an example for description, a left-side terminal of the first battery core 11 is A, and a right-side terminal thereof is B. A is aluminum foil, and B is copper foil, and there is a membrane for insulation therebetween. When the test steel nail 200 penetrates through the first battery core 11, A and B are connected by the steel nail. Therefore, there is a loop in which a current passes through a to B, then passes through the steel nail to B, and then flows to the battery core 2#.

If the fuse does not blow, when the steel nail continues moving downward to penetrate through the battery core 8#, three loops are formed, which are specifically a loop 1 shown in FIG. 16: a-A1-2#...7#-right-side terminal of 8#-b-a; a loop 2 shown in FIG. 17: a-right-side terminal of 1#-2#...7#-right-side terminal of 8#-b-a; and a loop 3 shown in FIG. 18: a-right-side terminal of 1#-2#...7#-C1-b-a, where if the loop 2 causes the fuse to break, the loop 3 does not exist.

In view of the above, when the steel nail penetrates the battery core 8#, a short-circuit loop is added to the battery core string, the resistance value of the loop decreases, and a voltage does not change. According to the Ohm's law: I=U/R, a current is large, to ensure that the fuse can quickly blow, thereby preventing a fire or explosion during nail penetration.

In conclusion, according to the battery module 100 in the embodiments of the present disclosure, by arranging the guard assembly between two battery cores oppositely arranged, during a nail penetration test, in a case that the steel nail 200 passes through a battery core, and the fuse does not blow, the fuse can be ensured to blow by adding a short-circuit loop when the steel nail 200 continues to penetrate another battery core, thereby greatly improving safety performance of the battery module 100.

The present disclosure further provides a vehicle, including the battery module 100 according to any one of the foregoing embodiments. Because the battery module 100 avoids severe arcing, fire, and combustion during a nail penetration test, and has high safety performance, the vehicle of the present disclosure also has the same advantages. Details are not described herein again.

Although some specific embodiments of the present disclosure have been described in detail by way of examples, a person skilled in the art should understand that the foregoing examples are only for description and are not intended to limit the scope of the present disclosure. A person skilled in the art should appreciate that modifications may be made to the foregoing embodiments without departing from the scope and spirit of the present disclosure. The scope of the present disclosure is limited only by the appended claims.

## Claims

1. A battery module, comprising:
a plurality of battery cores, connected in series and comprising a first battery core group and a second battery core group oppositely arranged, the first battery core group and the second battery core group being each provided with at least one of the battery cores;
a guard assembly, located between the first battery core group and the second battery core group, and comprising a first metal member, a first insulation member, and a second metal member that are stacked, wherein the first metal member is arranged opposite to at least one of the battery cores in the first battery core group, and the second metal member is arranged opposite to at least one of the battery cores in the second battery core group; and
a protection component, arranged between two of the battery cores adjacently arranged, and configured to cut off a circuit,
wherein when a test steel nail sequentially passes through the battery core corresponding to the first metal member in the first battery core group, the first metal member, the first insulation member, and the second metal member, a loop is formed in the battery module; and
when the test steel nail penetrates the battery core corresponding to the second metal member in the second battery core group, a short-circuit loop is added to the battery module.

2. The battery module according to claim 1, wherein the first insulation member comprises a first insulation layer and a second insulation layer, and the guard assembly comprises a first composite layer and a second composite layer, the first composite layer comprising the first insulation layer and the first metal member, and the second composite layer comprising the second insulation layer and the second metal member.

3. The battery module according to claim 1 or 2, wherein the guard assembly further comprises:
a second insulation member, located between the first battery core group and the first metal member, and/or located between the second battery core group and the second metal member.

4. The battery module according to any one of claims 1 to 3, wherein the protection component is a fuse.

5. The battery module according to any one of claims 1 to 3, wherein the first metal member and the second metal member are each an elongated sheet-shaped body, an end of the sheet-shaped body along a length direction thereof being connected to a terminal of the battery core.

6. The battery module according to any one of claims 1 to 3, wherein a position at which the sheet-shaped body is connected to the battery core in the corresponding first battery core group or second battery core group is adjustable.

7. The battery module according to any one of claims 1 to 3, wherein the sheet-shaped body comprises a body and an electrical connection piece, the body being in an elongated shape, and the electrical connection piece being located at an end of the body along a length direction, a length of the electrical connection piece being less than a width of the body, and the electrical connection piece being a bent member.

8. The battery module according to any one of claims 1 to 3, wherein a number of the battery cores in the first battery core group is equal to a number of the battery cores in the second battery core group.

9. A nail penetration protection method for a battery module, the battery module being the battery module according to any one of claims 1 to 8, and the nail penetration protection method comprising the following steps:
forming a loop in the battery module when a test steel nail sequentially penetrates through the battery core corresponding to the first metal member in the first battery core group, the first metal member, and the first insulation member to the second metal member; and
adding a short-circuit loop to the battery module when the test steel nail penetrates the battery core corresponding to the second metal member in the second battery core group.

10. A vehicle, comprising the battery module according to any one of claims 1 to 8.
